# EUROPEAN PATENT SPECIFICATION

(11) **EP 1 290 848 B1**
(45) Date of publication and mention of the grant of the patent: **26.08.2009**
(21) Application number: 01929651.6
(22) Date of filing: 21.05.2001
(51) Int. Cl.: H04L 29/06, H04L 29/12

(54) **IP ADDRESS ALLOCATION IN A MOBILE TELECOMMUNICATIONS NETWORK**
IP-ADRESSZUWEISUNG IN EINEM MOBILEN TELEKOMMUNIKATIONSNETZWERK
ATTRIBUTION D'ADRESSE IP DANS UN RESEAU DE TELECOMMUNICATION MOBILE

(30) Priority: 25.05.2000 GB 0012623
(43) Date of publication of application: 12.03.2003
(73) Proprietor: TELEFONAKTIEBOLAGET LM ERICSSON (publ), 164 83 Stockholm (SE)
(72) Inventor: VILANDER, Harri, Tapani, FIN-02600 Espoo (FI)
(74) Representative: Hagmann-Smith, Martin P.
(86) International application number: PCT/EP2001/005811
(87) International publication number: WO 2001/091420

(56) References cited:
- EP-A- 0 566 551
- EP-A- 0 883 266
- EP-A- 0 967 769
- EP-A- 0 987 860
- WO-A-00/10357
- WO-A-97/29605
- KOBAYASHI K ET AL: "NETWORK ACCESS CONTROL FOR DHCP ENVIRONMENT" IEICE TRANSACTIONS ON COMMUNICATIONS,JP,INSTITUTE OF ELECTRONICS INFORMATION AND COMM. ENG. TOKYO, vol. E81-B, no. 9, 1 September 1998 (1998-09-01), pages 1718-1723, XP000790192 ISSN: 0916-8516

## Description

### Field of the Invention

The present invention relates to IP address allocation in a mobile telecommunications network and more particularly to IP address changing such as occurs during a Serving Radio Network Subsystem relocation procedure.

### Background to the Invention

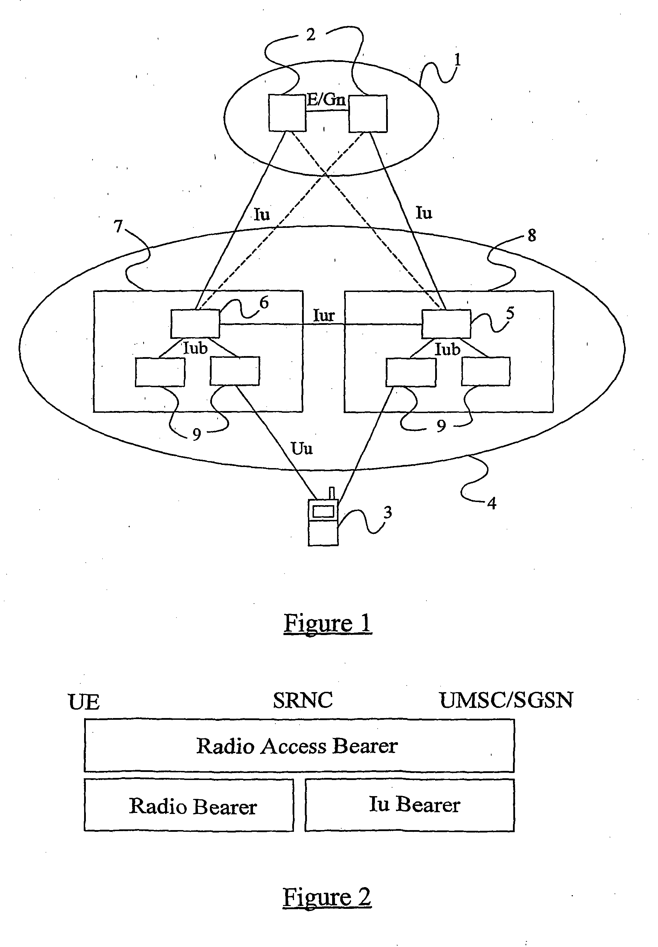

Figure 1 illustrates schematically a part of a Universal Mobile Telecommunications System (UMTS) network. The network includes a core network part 1, which may be a network handling voice calls using UMTS Mobile Switching Centres (UMSCs) or may be a data network such as a General Packet Radio Service (GPRS) network including Serving GPRS Support Nodes (SGSN) or Gateway GPRS Support Nodes (GGSNs). In Figure 1 the UMSCs and SGSNs/GGSNs are indicated generally with the reference numeral 2. A subscriber or User Equipment (UE) 3 is coupled to the core network 1 via an access network 4 referred to as a Universal Terrestrial Radio Access Network (UTRAN). More particularly, the UMSCs/SGSNs/GGSNs 2 are connected to Radio Network Controllers (RNCs) 5,6 of the UTRAN 4 over an interface referred to as the Iu interface.

Each RNC 5 forms part of a Radio Network Subsystem (RNSs) 7,8 which also comprises a set of Base Transceiver Stations 9 referred to in UMTS terminology as Node B's. The interface between a RNC 5,6 and a Node B 9 is known as the Iub interface. A Node B 9 provides the connection point to the UTRAN 4 for a UE 3, and the interface between the Node B 9 and the UE 3 is known as the Uu interface. The RNS (for example RNS 7 in Figure 1) which connects a UE 3 to the core network 1 at any given time is referred to as the Serving RNS (SRNS) for that particular UE 3, whilst the RNC 6 of the SRNS 7 is known as the Serving RNC (SRNC). The SRNC is in charge of the radio connection between the UE 3 and the UTRAN 4 and the SRNC 6 terminates the Iu protocols for the UE 3. A so-called "Drift" RNC (DRNC) may support a SRNC with additional radio resources when the connection between the UTRAN and the UE requires the use of Node Bs controlled by the DRNC.

Figure 2 illustrates in very general terms the bearer structure used by UTRAN to carry user data between the UE 3 and the core network 1. When it is required to establish a user plane connection, the responsible UMSC or SGSN 2 instructs the UTRAN 4 to establish a logical connection between the UMSC or SGSN 2 and the UE 3. This logical connection is referred to as a Radio Access Bearer (RAB). The established RAB inherits requirements of the requested UMTS service, e.g. Quality of Service, etc. Based on the inherited requirements of the RAB, the SRNC 6 establishes user plane connections with the core network 1 (i.e. UMSC or SGSN 2) and with the UE 3. The connection between the SRNC 6 and the core network 1 is referred to as the Iu bearer whilst the connection between the SRNC 6 and the UE 3 is referred to as the Radio Bearer (RB). Both of these bearers represent further logical channels, with the SRNC 6 performing a mapping between them. The bearers themselves are mapped onto appropriate traffic channels for transmission over the respective interfaces (Iu and Uu).

A single UE 3 may be associated with one or more RABs. For example, a UE 3 may simultaneously make use of one RAB established for a voice call, and another RAB established for a data call. An RNC 5,6 uses RAB identifiers to distinguish between these different RABs. In the same way, a RB identity is used to distinguish between RBs. During the setting-up of a new user plane connection, a RAB and a RB are implicitly associated with one another by the RNC. Whilst the Iu bearer associated with a RAB always extends between the UMSC/SGSN 2 and the SRNS 7, the RB may extend directly between the SRNS 7 and the UE 3 or between the SRNS 7 and the UE 3 via a DRNS (such as the RNS 8 in Figure 1). In the latter case, the RB is said to have multiple legs. In some circumstances, RBs may simultaneously exist directly between the SRNS 7 and the UE 3 and indirectly via a DRNS 8.

An important feature of mobile telecommunication systems is the ability to allow subscribers to move within (and outside of) particular networks. This often requires a process known as SRNS relocation, in which an existing SRNS is replaced by a "target" RNS. This might arise, for example, where a UE moves to an extent that it is no longer able to use any of the Base Stations controlled by the current SRNS. In order to optimise the usage of resources, control of the radio resources may be transferred from the current SRNS to a new RNS. In situations where a RB is already established between a UE and a Drift RNS, it may be appropriate to make the DRNS the SRNS, for example to optimise the connection to the core network (such that the DRNS becomes the target RNS).

In either of the above scenarios, the SRNS relocation process may be initiated by the Serving RNC sending to the core network (UMSC or SGSN) a Relocation Required message. This message is currently defined in the Radio Access Network Application Part (RANAP) protocol (UMTS TS 25.413) and carried over the Iu interface. The core network responds to receipt of a Relocation Required message by sending a Revocation Request message to the target RNC (of the target RNS). The Relocation Request message is also defined in the RANAP protocol.

The Relocation Request message contains the identities of the RABs to be transferred. Both the Relocation Request message and the Relocation Required message contain an RRC Initialisation Information container. This container is defined in the Radio Resource Control (RRC) protocol (UMTS TS 25.331), and contains amongst other things the identities of the RBs to be transferred as well as details of the mappings between the RBs and the lower layer attributes, i.e. to logical, transport, and physical channels.

An important feature of UMTS is an ability to facilitate Internet Protocol (IP) access for mobile subscribers. In order for a subscriber (i.e. UE 3 in Figure 1) to be able to access the Internet, that subscriber must be allocated a unique IP address. In UMTS, a proposal exists for allocating IP addresses to subscribers at the RNC level and in which the SRNS is coupled directly to the Internet rather than via a core network (such as a GPRS network). This proposal is referred to as Direct Internet Access (DIA). Other proposals for allocating IP addresses include the provision in the UTRAN 4 of specialised nodes known as Access Control Points (ACPs) - a specialised Media Gateway Controller - which are responsible for mobility management and session management operations such as IP address allocation.

The permanent allocation of IP addresses to mobile subscribers is generally thought to be impractical, given the limited address space available (e.g. in IPv4). The preferred form of address allocation is therefore a dynamic allocation mechanism, where subscribers are allocated IP addresses only when IP access is required. Considering the DIA scenario, each RNC is allocated a unique IP address routing prefix, and subscribers attached to a particular RNC are allocated IP addresses containing the associated routing prefix. This allows incoming IP datagrams to be routed to the correct, SRNC.

Any mobile IP system must take into account the possibility that subscribers may roam within a given network and between networks (as outlined above). In order to allow incoming datagrams to "follow" a roaming subscriber, it is proposed that as part of the handover process the subscriber will be allocated a new IP address containing the routing prefix of the new SRNC. A protocol such as Mobile IP may be used to allow datagrams directed to a previous SRNC to be forwarded to the current SRNC.

EP 0 883 266 discloses a router device, datagram transfer method and communication system for hand-off control for mobile terminals.
EP 0 967 769 discloses a technique for updating the address of wireless mobile terminal hosts affiliated with a wired network.
WO 99/41927 discloses a system for changing the service profile of a mobile subscriber. In this document the mobile station figures out whether and when the connection to the network should be exchanged, and acts accordingly.

### Summary of the Invention

In the Direct Internet Access (DIA) scenario, SRNS relocation requires a new IP address to be negotiated between the UE and the new SRNS following the SRNS relocation process. Only after an IP address has been allocated can the UE issue a Binding Update to its Home Agent and correspondent hosts. This results in a prolonged period during which packets received from a correspondent host will be routed to the old SRNS and tunnelled to the new SRNS. Datagrams may be delayed and/or lost in this tunnelling process. Whilst this may not be a significant problem for traditional IP uses (such as downloading data from a web server), it may interfere with certain real time applications such as IP telephony (Voice-Over-IP) and videoconferencing.

It is an object of the present invention to overcome or at least mitigate the above noted problems. In particular, it is an object of the present invention to reduce or eliminate the need for the tunnelling of IP datagrams over the Iur interface following SRNS relocation.

According to a first aspect of the present invention there is provided a method of changing the IP address allocated to a mobile UE during a SRNS relocation process in a mobile telecommunications system and in which relocation process, control of the UE is transferred from a currently Serving Radio Network Subsystem (SRNS) to a Target RNS, the method comprising:
prior to said SRNS relocation taking place, but after it has been decided that a SRNS relocation is required, notifying the UE of a new IP address or means for generating a new IP address; and
during said SRNS relocation process or immediately thereafter replacing the previously used IP address with the new IP address as the in-use IP address, wherein prior to said SRNS relocation taking place, but after it has been decided that a SRNS relocation is required, the UE is notified of an activation identity using which the UE is able to determine when to replace the previously used IP address with the new IP address as the in-use UP address.

Embodiments of the present invention provide a new IP address to a mobile UE which can be brought into use immediately after the SRNS relocation process is completed. A Binding update can be sent from the UE to the Home Agent and to correspondent hosts almost immediately. No significant disruption of an IP service should therefore occur.

The present invention may be employed in association with either a hard handover or a soft handover, both of which may involve SRNS relocation. However, in some cases SRNS relocation may be carried out independently of a handover process. The invention applies to both the Direct Internet Access architecture and to other architectures where a new IP address is required as a result of SRNS relocation.

Preferably, the mobile telecommunications system is a Universal Mobile Telecommunications System (UMTS). However, the invention may also be employed in other systems.

Within the mobile telecommunications system, IP addresses may be allocated by the Serving or Target RNCs or by another network node, such as an Access Control Point (ACP). The ACP may be integrated into the associated RNC or may be implemented as a separate node. Preferably, said new IP address is sent from the current ACP to the UE prior to SRNS relocation. Alternatively, said new IP address may be sent to the UE from the target ACP.

As mentioned, prior to said SRNS relocation taking place, the UE is notified of an activation identity using which the UE is able to determine when to replace the previously used IP address with the new IP address as the in-use IP address. In one embodiment of the invention, the activation identity is a Radio Resource identity (such as a SRNTI or SRNC identity) such that the new IP address is brought into use when the UE notices that the associated Radio Resource identity is active. This approach avoids the need for the sending of a specific activation message to the UE following completion of the SRNS relocation process, as the Radio Resource identity becomes active automatically as part of the SRNS relocation process.

The new IP address may be generated using the activation identity. For example, where the activation identity is an SRNTI, this may form the host part of the new IP address.

The step of notifying the UE of a new IP address may be carried out following the making of a decision, e.g. by the current SRNS, to perform SRNS relocation. At this point, the target RNS (or a node controlling the target RNS such as an ACP node) reserves a unique IP address for the UE and which is notified to the UE.

In certain embodiments of the invention, the UE may be notified of a plurality of new IP addresses and respective activation identities, prior to one or more SRNS relocation processes.

According to a second aspect of the present invention there is provided a mobile telecommunications system comprising means for notifying a mobile UE of a new IP address or means for generating a new IP address prior to carrying out a SRNS relocation process whereby control of the UE is transferred from a currently Serving Radio Network Subsystem (SRNS) to a Target RNS, the UE being arranged to replace the previously used IP address with the new IP address as the in-use IP address during said SRNS relocation process or immediately thereafter, characterized by means for notifying the UE, prior to said SRNS relocation taking place, but after it has been decided that a SRNS relocation is required, of an activation identity using which the UE is able to determine when to replace the previously used IP address with the new IP address as the in-use IP address.

According to a third aspect of the present invention there is provided a mobile User Equipment (UE) comprising:
receiving means for receiving from a mobile telecommunications network a new IP address or means for generating a new IP address while the UE is using a previously allocated IP address;
first processing means for recognising when said previously allocated IP address should be replaced by said new IP address, following an SRNS relocation; and
second processing means for replacing said previously allocated IP address with said new IP address following recognition for subsequent IP access, **characterized in that** the UE is arranged to receive, prior to said SRNS relocation taking place, but after a decision has been taken that a SRNS relocation is required, an activation identity using which the UE is able to determine when to replace the previously used IP address with the new IP address as the in-use IP address.

### Brief Description of the Drawings

For a better understanding of the present invention and in order to show how the same may be carried into effect reference will now be made, by way of example, to the accompanying drawings, in which:
Figure 1 illustrates schematically a UMTS network;
Figure 2 illustrates schematically the bearer structure used in the UTRAN part of the UMTS network of Figure 1;
Figure 3 illustrates SRNS relocation during a soft handover in a UMTS network;
Figure 4 is a signalling diagram illustrating SRNS relocation and IP address changing in a UMTS network;
Figure 5 is a flow diagram further illustrating SRNS relocation and IP address changing in a UMTS network;
Figure 6 illustrates SRNS relocation during a hard handover in a UMTS network.

### Detailed Description of Certain Embodiments

A typical UMTS network has been described above with reference to Figure 1, whilst the UTRAN bearer structure employed in such a network has been described with reference to Figure 2.

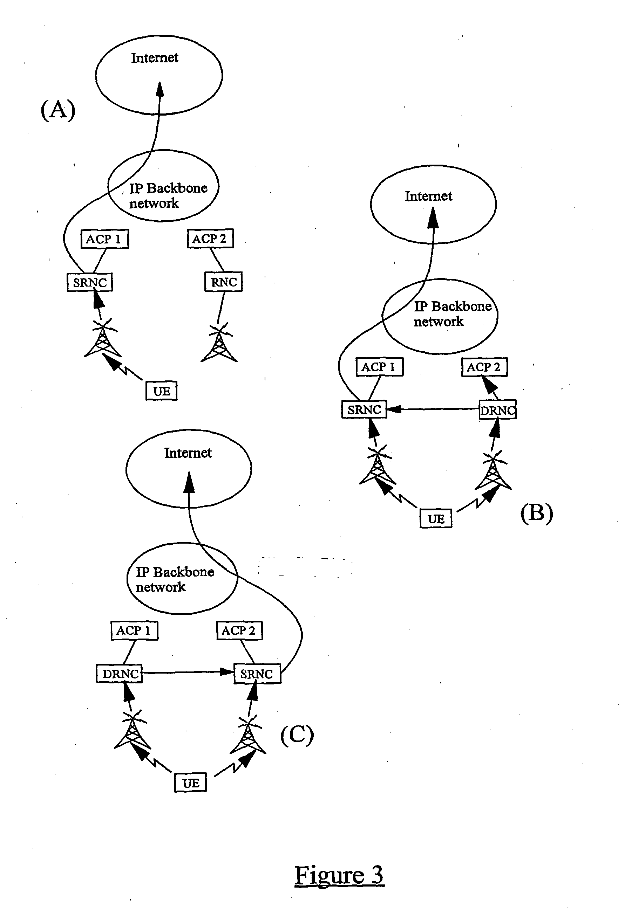

Figures 3A to 3C illustrates a scenario in a UMTS network where SRNS (or SRNC) relocation arises. The network incorporates the Direct Internet Access (DIA) architecture described briefly above and in which the point of connection to the Internet for a particular mobile UE is the SRNC for that user (the SRNC being coupled to the

Internet via an IP backbone network). IP address allocation is handled by respective Access Control Points (ACP 1 and ACP 2) coupled to the two RNCs.

In Figure 3A, a RB has been established between the UE and the SRNC and, it is assumed, an IP address allocated to the UE from the pool of IP addresses available to the SRNC. IP datagrams are conveyed over the established RB between the UE and the SRNC.

In Figure 3B, the situation of Figure 3A has been modified such that an RB has been established between the SRNC and the UE via a Drift RNC (DRNC). UMTS provides for multiple RBs to exist simultaneously for a given UE in order, for example, to reduce the likelihood of data transmission errors (the same data may be sent simultaneously to and from the UE over two or more RBs). In the situation of Figure 3B, the SRNC remains in control of the radio resources allocated to the UB and importantly remains the node through which IP packets associated with the UE are routed. The IP address used in the situation of Figure 3A therefore continues to be used in the situation of Figure 3B.

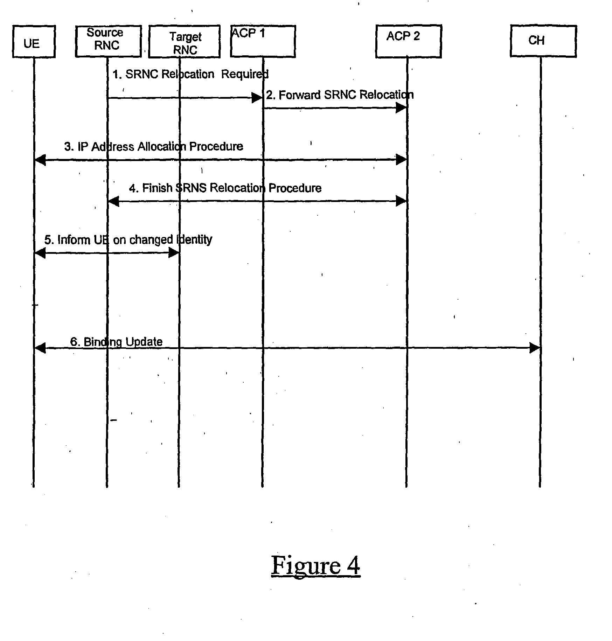

In order to optimise the connection path between the core network and the UE (or for other reasons), the SRNC may decide that the DRNC should take over the role of SRNC, as illustrated in Figure 3C. Figure 4 is a signalling diagram illustrating an IP address changing process which follows this decision. The six signalling steps involve:
1. The UTRAN (source SRNC) makes the decision to perform the SRNS relocation procedure. This involves making a decision on which RNC the Serving RNC functionality is to be relocated to. The source SRNC sends an SRNS Relocation required message to the ACP 1.
2. If ACP 1 determines from the target RNC Identifier that the SRNS relocation is an inter-ACP SERVING RNC Relocation, then ACP 1 sends a Forward SRNS relocation request to ACP 2.
3. The ACP 2 is able to initiate an IP address allocation procedure with the UB (e.g. via the current SRNC). Any IP address allocation method can be used such as address allocation by a DHCP server.
   In practice, ACP 2 may (immediately) send a Router Advertisement message to the UE so that it may start to acquire a new IP address for the new Gateway (i.e. the RNC Gateway) using normal statefull or stateless IP address allocation methods. During the allocation process, a new IP address, together with an "activation" identity, is sent to the UE. An alternative process involves the ACP 2 sending an IP address and an activation identity in one message directly to the UE.
   The activation identity is an identity which is associated with the target RNC, and more particularly with the radio link which will be used after SRNS relocation. For example, the identity may be the SRNTI or SRNC identity of the target RNC, or a Core Network (CN) domain identifier - the SRNTI and SRNC together form an identity known as the UTRAN Radio Network Temporary Identity (URNTI).
   At the end of the procedure, the UE has a valid IP address for the new SRNC. The UE also knows that the address becomes valid immediately when the activation identity becomes valid. Since the activation identity becomes valid due to some Radio Resources Control operations between the UTRAN and the UE, there is no need for an explicit notification (e.g. on the IP protocol layer).
4. The SRNS Relocation procedure is finished between source and target nodes (ACPs and RNCs).
5. The UE becomes aware of the new activation identity. This phase may be performed during the actual SRNS Relocation procedure or it may be a separate procedure after the SRNS Relocation.
6. After the UE has noticed that the activation identity is active, e.g. the Serving RNC Identity is the same as defined in connection with the IP address allocation procedure, the UE may start to use the address. At this stage, the UE must notify the correspondent host(s) so that it (or they) may start to use the new address. The previous SRNS should also be notified of the new IP address. In the case of mobile IP, the home agent will also be notified. Notification may be done using a Binding Update message. The correspondent host(s) may then send data directly to the gateway in the new SRNC.

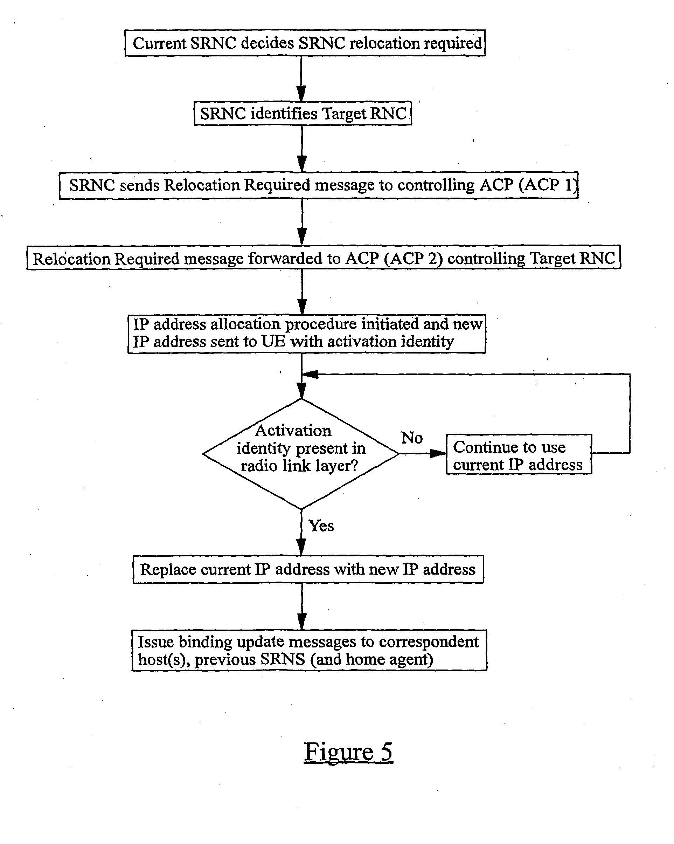

This process is further illustrated by the flow diagram of Figure 5.

The use of an activation identity which is sent to the UE as an intrinsic part of the relocation procedure or which is incorporated into the existing signalling structure avoids the need for an additional signalling message. However, it will be appreciated that an additional message may be used to activate a new IP address if necessary.

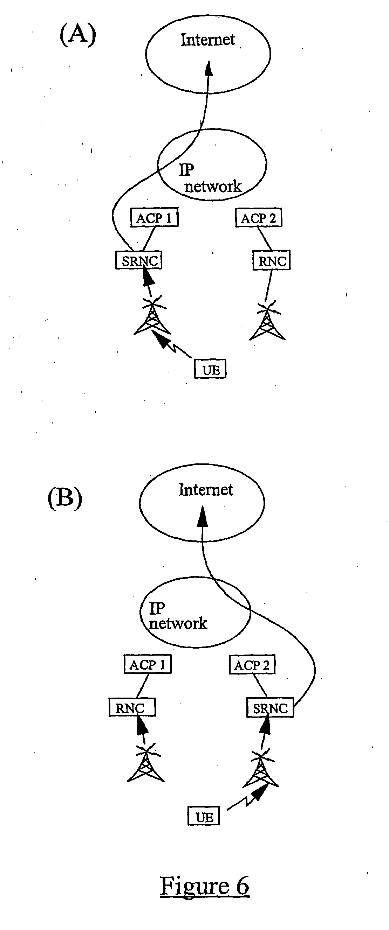

Figures 6A and 6B illustrates a hard handover scenario during which the present invention may be employed. The role of serving RNC for the UE is passed directly from a first to a second RNC. Prior to handover, the UE is notified of a new IP address (or means for generating an IP address) such that the new IP address is available immediately following the handover.

It will be appreciated by the person of skill in the art that various modifications may be made to the above described embodiment without departing from the scope of the present invention. For example, whilst the invention has been illustrated with reference to a DIA architecture, it may also be applied in architectures where the SRNS is coupled to the Internet via a core network of the UMTS network. This core network may be a GPRS based network or some other type of packet switched network. Other Internet access architectures are also contemplated.

## Claims

1. A method of changing the IP address allocated to a mobile UE (3) during a SRNS relocation process in a mobile telecommunications system and in which relocation process, control of the UE (3) is transferred from a currently Serving Radio Network Subsystem (SRNS) (7) to a Target RNS (8), the method comprising:
prior to said SRNS relocation taking place, but after it has been decided that a SRNS relocation is required, notifying the UE (3) of a new IP address or means for generating a new IP address; and
during said SRNS relocation process or immediately thereafter replacing the previously used IP address with the new IP address as the in-use IP address,
**characterised in that,** prior to said SRNS relocation taking place, but after it has been decided that a SRNS relocation is required, the UE (3) is notified of an activation identity using which the UE (3) is able to determine when to replace the previously used IP address with the new IP address as the in-use IP address.

2. A method according to claim 1, wherein said relocation is carried out as part of or following a hard handover or soft handover process.

3. A method according to claim 1 or 2, wherein the mobile telecommunications network has a Direct Internet Access architecture or an architecture in which Internet access is obtained via a core network (1).

4. A method according to any one of the preceding claims, wherein the mobile telecommunications system is a Universal Mobile Telecommunications System (UMTS).

5. A method according to any one of the preceding claims, wherein IP addresses are allocated by the Serving RNCs (5, 6) or by an Access Control Point (ACP).

6. A method according to any preceding claim, wherein said activation identity is a Radio Resource identity such that the new IP address is brought into use when the UE (3) notices that the associated Radio Resource identity is active.

7. A method according to claim 6, wherein said Radio Resource identity is a CN domain identity, SRNTI identity, or SRNS identity.

8. A method according to any one of the preceding claims, wherein the step of notifying the UE (3) of a new IP address is carried out following the making of a decision to perform SRNS relocation.

9. A method according to any one of the preceding claims, wherein the UE (3) is notified of a plurality of new IP addresses and respective activation identities, prior to one or more SRNS relocation processes.

10. A mobile telecommunications system comprising means for notifying a mobile UE (3) of a new IP address or means for generating a new IP address prior to carrying out a SRNS relocation process whereby control of the UE (3) is transferred from a currently Serving Radio Network Subsystem (SRNS) (7) to a Target RNS (8), the UE (3) being arranged to replace the previously used IP address with the new IP address as the in-use IP address during said SRNS relocation process or immediately thereafter,
**characterized by** means for notifying the UE (3), prior to said SRNS relocation taking place, but after it has been decided that a SRNS relocation is required, of an activation identity using which the UE (3) is able to determine when to replace the previously used IP address with the new IP address as the in-use IP address.

11. A mobile User Equipment (UE) (3) comprising:
receiving means for receiving from a mobile telecommunications network a new IP address or means for generating a new IP address while the UE (3) is using a previously allocated IP address;
first processing means for recognising when said previously allocated IP address should be replaced by said new IP address, following an SRNS relocation; and
second processing means for replacing said previously allocated IP address with said new IP address following recognition for subsequent IP access,
**characterized in that** the UE (3) is arranged to receive, prior to said SRNS relocation taking place, but after a decision has been taken that a SRNS relocation is required, an activation identity using which the UE (3) is able to determine when to replace the previously used IP address with the new IP address as the in-use IP address.

## Patentansprüche

1. Verfahren zur Änderung der IP-Adresse, die einem mobilen UE (3) zugeordnet ist, während eines SRNS-Umlegungsprozesses in einem mobilen Telekommunikationssystem, und wobei in diesem Umlegungsprozess die Steuerung des UE (3) von einem gegenwärtig versorgenden Funknetzwerkteilsystem (SNRS) (7) an ein Ziel-RNS (8) übergeben wird, wobei das Verfahren umfasst:
bevor die SRNS-Umlegung stattfindet, aber nachdem entschieden worden ist, dass eine SRNS-Umlegung erforderlich ist, Benachrichtigen des UE (3) über eine neue IP-Adresse oder ein Mittel zur Erzeugung einer neuen IP-Adresse; und
während des SRNS-Umlegungsprozesses oder unmittelbar danach erfolgendes Ersetzen der bisher verwendeten IP-Adresse durch eine neue IP-Adresse als die in Verwendung befindliche IP-Adresse,
**dadurch gekennzeichnet, dass,** bevor die SRNS-Umlegung stattfindet, aber nachdem entschieden worden ist, dass eine SRNS-Umlegung erforderlich ist, das UE (3) über eine Aktivierungsidentität benachrichtigt wird, mittels welcher das UE (3) in der Lage ist, zu bestimmen, wann die vorher verwendete IP-Adresse durch die neue IP-Adresse als die in Verwendung befindliche IP-Adresse zu ersetzen ist.

2. Verfahren nach Anspruch 1, wobei die Umlegung als Teil eines harten oder weichen Handover-Prozesses oder nach einem solchen durchgeführt wird.

3. Verfahren nach Anspruch 1 oder 2, wobei das mobile Telekommunikationsnetzwerk eine direkte Internetzugangsarchitektur oder eine Architektur hat, in der Internetzugang über ein Kernnetzwerk (1) erreicht wird.

4. Verfahren nach einem der vorhergehenden Ansprüche, wobei das mobile Telekommunikationssystem ein Universelles Mobiles Telekommunikationssystem (UMTS) ist.

5. Verfahren nach einem der vorhergehenden Ansprüche, wobei IP-Adressen durch die versorgenden RNCs (5, 6) oder durch einen Zugangskontrollpunkt (ACP) zugeordnet werden.

6. Verfahren nach einem der vorhergehenden Ansprüche, wobei die Aktivierungsidentität eine Funkressourcenidentität ist, so dass die neue IP-Adresse zur Verwendung gebracht wird, wenn das UE (3) erfährt, dass die zugeordnete Funkressourcenidentität aktiv ist.

7. Verfahren nach Anspruch 6, wobei die Funkressourcenidentität eine Kernnetzwerk-Domänenidentität, SRNTI-Identität oder SRNS-Identität ist.

8. Verfahren nach einem der vorhergehenden Ansprüche, wobei der Schritt der Benachrichtigung des UE (3) über eine neue IP-Adresse durchgeführt wird, nachdem eine Entscheidung getroffen worden ist, eine SRNS-Umlegung durchzuführen.

9. Verfahren nach einem der vorhergehenden Ansprüche wobei das UE (3) vor einem oder mehreren SRNS-Umlegungsprozessen über eine Vielzahl von neuen IP-Adressen und jeweiligen Aktivierungsidentitäten benachrichtigt wird.

10. Mobiles Telekommunikationssystem, umfassend ein Mittel zur Benachrichtigung eines mobilen UE (3) über eine neue IP-Adresse oder ein Mittel zur Erzeugung einer neuen IP-Adresse vor Durchführung eines SRNS-Umlegungsprozesses, wodurch die Steuerung des UE (3) von einem gegenwärtig versorgenden Funknetzwerkteilsystem (SRNS) (7) an ein Ziel-RNS (8) übergeben wird, wobei das UE (3) dafür eingerichtet ist, die vorher verwendete IP-Adresse durch eine neue IP-Adresse als die in Verwendung befindliche IP-Adresse während des SRNS-Umlegungsprozesses oder unmittelbar danach zu ersetzen,
**gekennzeichnet durch** ein Mittel zur Benachrichtigung des UE (3), bevor die SRNS-Umlegung stattfindet, aber nachdem entschieden worden ist, dass eine SRNS-Umlegung erforderlich ist, über eine Aktivierungsidentität, mittels welcher das UE (3) in der Lage ist, zu bestimmen, wann die vorher verwendete IP-Adresse **durch** die neue IP-Adresse als die in Verwendung befindliche IP-Adresse zu ersetzen ist.

11. Mobiles Endgerät (UE) (3), umfassend:
ein Empfangsmittel zum Empfangen einer neuen IP-Adresse von einem mobilen Telekommunikationsnetzwerk oder ein Mittel zur Erzeugung einer neuen IP-Adresse, während das UE (3) eine bisher zugeordnete IP-Adresse verwendet;
ein erstes Verarbeitungsmittel zur Erkennung, wann die vorher zugeordnete IP-Adresse nach einer SRNS-Umlegung durch die neue IP-Adresse ersetzt werden sollte; und
ein zweites Verarbeitungsmittel zum Ersetzen der bisher zugeordneten IP-Adresse durch eine neue IP-Adresse nach Erkennung für nachfolgenden IP-Zugang,
**dadurch gekennzeichnet, dass** das UE (3) dafür eingerichtet ist, bevor die SRNS-Umlegung stattfindet, aber nachdem eine Entscheidung getroffen worden ist, dass eine SRNS-Umlegung erforderlich ist, eine Aktivierungsidentität zu empfangen, mittels welcher das UE (3) in der Lage ist, zu bestimmen, wann die vorher verwendete IP-Adresse durch die neue IP-Adresse als die in Verwendung befindliche IP-Adresse zu ersetzen ist.

## Revendications

1. Procédé destiné à modifier l'adresse IP affectée à un équipement UE mobile (3) au cours d'un processus de relocalisation de sous-système SRNS dans un système de télécommunication mobile, et où dans le processus de relocalisation, la commande de l'équipement UE (3) est transférée d'un sous-système de réseau radio de desserte en cours (SRNS) (7) à un sous-système RNS cible (8), le procédé comprenant les étapes ci-dessous consistant à :
avant que ladite relocalisation de sous-système SRNS n'ait lieu, mais après qu'il a été décidé qu'une relocalisation de sous-système SRNS était requise, indiquer à l'équipement UE (3) l'existence d'une nouvelle adresse IP ou d'un moyen permettant de générer une nouvelle adresse IP ; et
au cours dudit processus de relocalisation de sous-système SRNS ou immédiatement après celui-ci, remplacer l'adresse IP précédemment utilisée par la nouvelle adresse IP en tant qu'adresse IP en cours d'utilisation,
**caractérisé en ce que,** avant que ladite relocalisation de sous-système SRNS n'ait lieu, mais après qu'il a été décidé qu'une relocalisation de sous-système SRNS était requise, l'équipement UE (3) est informé de la présence d'une identité d'activation au moyen de laquelle l'équipement UE (3) est en mesure de déterminer le moment où est requis le remplacement de la précédente adresse IP par la nouvelle adresse IP en tant qu'adresse IP en cours d'utilisation.

2. Procédé selon la revendication 1, dans lequel ladite relocalisation est mise en oeuvre dans le cadre d'un, ou suite à un transfert intercellulaire matériel ou un transfert intercellulaire logiciel.

3. Procédé selon la revendication 1 ou 2, dans lequel le réseau de télécommunication mobile présente une architecture d'accès direct à Internet ou une architecture dans laquelle l'accès à Internet est obtenu par l'intermédiaire d'un réseau fédérateur (1).

4. Procédé selon l'une quelconque des revendications précédentes, dans lequel le système de télécommunication mobile est un système universel de télécommunication mobile (UMTS).

5. Procédé selon l'une quelconque des revendications précédentes, dans lequel les adresses IP sont affectées par les RNC de desserte (5, 6) ou par un point de contrôle d'accès (ACP).

6. Procédé selon l'une quelconque des revendications précédentes, dans lequel ladite identité d'activation est une identité de ressources radio de sorte que la nouvelle adresse IP est mise en service lorsque l'équipement UE (3) remarque que l'identité de ressources radio est active.

7. Procédé selon la revendication 6, dans lequel ladite identité de ressources radio est une identité de domaine CN, une identité SRNTI, ou identité SRNS.

8. Procédé selon l'une quelconque des revendications précédentes, dans lequel l'étape de notification d'une nouvelle adresse IP à l'équipement UE (3) est mise en oeuvre après la prise d'une décision de mettre en oeuvre une relocalisation de sous-système SRNS.

9. Procédé selon l'une quelconque des revendications précédentes, dans lequel l'équipement UE (3) est informé de l'existence d'une pluralité de nouvelles adresses IP et d'identités d'activation respectives, avant un ou plusieurs processus de relocalisation de sous-systèmes SRNS.

10. Système de télécommunication mobile comprenant un moyen pour indiquer à un équipement UE mobile (3) l'existence d'une nouvelle adresse IP ou un moyen pour générer une nouvelle adresse IP avant de mettre en oeuvre un processus de relocalisation de sous-système SRNS, moyennant quoi la commande de l'équipement UE (3) est transférée d'un sous-système de réseau radio de desserte (SRNS) (7) à un sous-système RNC cible (8), l'équipement UE (3) étant agencé dans le but de remplacer l'adresse IP précédemment utilisée par la nouvelle adresse IP en tant qu'adresse IP en cours d'utilisation au cours dudit processus de relocalisation de sous-système SRNS ou immédiatement après celui-ci,
**caractérisé par** un moyen pour indiquer à l'équipement UE (3), avant que ladite relocalisation de sous-système SRNS n'ait lieu, mais après qu'il a été décidé qu'une relocalisation de sous-système SRNS était requise, une identité d'activation au moyen de laquelle l'équipement UE (3) est en mesure de déterminer le moment où est requis le remplacement de la précédente adresse IP par la nouvelle adresse IP en tant qu'adresse IP en cours d'utilisation.

11. Équipement utilisateur mobile (UE) (3) comprenant :
un moyen de réception pour recevoir, d'un réseau de télécommunication mobile, une nouvelle adresse IP ou un moyen pour générer une nouvelle adresse IP alors que l'équipement UE (3) utilise une adresse IP précédemment affectée ;
un premier moyen de traitement pour déceler le moment où ladite adresse IP précédemment affectée doit être remplacée par ladite nouvelle adresse IP, à la suite d'une relocalisation de sous-système SRNS ; et
un second moyen de traitement pour remplacer ladite adresse IP précédemment affectée par ladite nouvelle adresse IP suite à une reconnaissance d'un accès IP subséquent,
**caractérisé en ce que** l'équipement UE (3) est agencé pour recevoir, avant que ladite relocalisation de sous-système SRNS n'ait lieu, mais après qu'il a été décidé qu'une relocalisation de sous-système SRNS était requise, une identité d'activation au moyen de laquelle l'équipement UE (3) est en mesure de déterminer le moment où est requis le remplacement de la précédente adresse IP par la nouvelle adresse IP en tant qu'adresse IP en cours d'utilisation.
